# EUROPEAN PATENT APPLICATION

(11) **EP 4 273 654 A1**
(43) Date of publication of application: **08.11.2023**
(21) Application number: 22171580.8
(22) Date of filing: 04.05.2022
(51) Int. Cl.: G05D 1/00, B60R 1/26

(54) **REAR COLLISION WARNING FOR VEHICLES**

(71) Applicant: Vay Technology GmbH, 12099 Berlin (DE)
(72) Inventor: Kushnir, Artem, 12099 Berlin (DE); Krauss, Bryan, 12099 Berlin (DE); Mohanan, Naveen, 12099 Berlin (DE); Wojke, Nicolai, 12099 Berlin (DE); Sudrich, Simon, 12099 Berlin (DE)
(74) Representative: Eisenführ Speiser

(57) **Abstract**

The present invention relates to a method for controlling a vehicle, in particular a teleoperated vehicle, comprising the steps of: providing an image of a rear view of the vehicle; performing a computer vision technique on the image, thereby identifying a rear risk object with a bounding volume; determining an information, in particular a distance information, of the rear risk object based on at least one parameter of the bounding volume; and performing a maneuver with the vehicle based on the information, in particular the distance information.

## Description

### TECHNICAL FIELD

The present invention relates to a method for controlling a vehicle, in particular a teleoperated vehicle, preferably during teleoperation.

The invention can be applied in vehicles, such as cars, automobiles or the like, but may also be used in other road vehicles, such as trucks, or in robots, such as robotic humanoids.

The invention can also be applied in every type of vehicle such as common vehicles, selfdriving vehicles, remote-controlled vehicles, teleoperated vehicles or the like.

### BACKGROUND

Teleoperation is the ability of remotely controlling a vehicle from a distant location in real time, e.g. via a teleoperator station and/or a teledriver.

Teleoperation may be used as a method for providing a consumer facing shared mobility service in urban environments. In this case, a vehicle would be driven remotely to a customer by a teledriver, in particular without any driver inside of the vehicle. Once the vehicle arrives at a customer's location, the customer may take over and drive the vehicle to any destination. Once at the destination, the customer may leave the vehicle, in particular not thinking about where to park since the vehicle is taken over again by the teledriver and be driven to a next customer.

However, other traffic participants often violate common traffic rules, such as speed limit or safety distance, thereby increasing the risk of collisions, in particular the risk of rear-end collisions.

Therefore, there is a further need to improve controlling methods for vehicles, in particular for teleoperated vehicles during teleoperation, preferably to prevent collisions, in particular rear-end collisions, with the teleoperated vehicle.

### SUMMARY

An object of the present invention is to provide a method for reducing rear-end collisions on vehicles, in particular on teleoperated vehicles.

According to a first aspect of the invention, a method for controlling a vehicle, in particular a teleoperated vehicle, is provided, comprising the steps of: providing an image of a rear view of the vehicle; performing a computer vision technique on the image, thereby identifying a rear risk object with a bounding volume; determining an information, in particular a distance information, of the rear risk object based on at least one parameter of the bounding volume; and performing a maneuver with the vehicle based on the information, in particular distance information.

Thus, a method for minimizing rear-end collisions on vehicles is proposed, in particular during the vehicle is teleoperated, e.g. by a teleoperator station and/or teledriver. Preferably, the vehicle is a teleoperated vehicle, e.g. a car or an automobile or the like.

Preferably, the proposed method is used within shared mobility and/or during teleoperation, in particular during the vehicle has no driver and/or is controlled by a teleoperator. In order to teleoperate the vehicle, video and/or audio data may be obtained by the vehicle, e.g. by a sensor on the vehicle, such as a camera. Preferably, the video and/or audio data is sent by the vehicle to a teleoperator station, e.g. via cellular network. The video and/or audio data is then used to remotely control the vehicle in real time, e.g. by a teledriver. For this, the video and/or audio data may be displayed in the teleoperator station, e.g. via a display in front of the teledriver. In order to remotely control the vehicle, the teleoperator station may comprise means for remotely controlling the vehicle, e.g. means for steering commands and the like. Thus, the teledriver is able to send steering, throttle and/or brake commands to the vehicle accordingly. Preferably, the teleoperated vehicle is directly driven by an operator of a teleoperator station using teleoperation, e.g. by using video and/or audio data and/or a visually validated path. For controlling the teleoperated vehicle, a network may be used, e.g. a network having wireless communication like radio communication.

In a first step, an image of the rear view of the vehicle is provided, e.g. by a camera monitoring the rear view of the vehicle.

The image may be any kind of image. Preferably, the image is a digital image, in particular of a two-dimensional picture showing the rear view of the vehicle. For example, the image is digital image having a resolution of 500x480 pixel or higher, for example 1280x720 pixel. Preferably, the resolution is about 1K or higher, e.g. 1936x1216 pixel or the like. Preferably, the image is part of an image stream, e.g. an image of a plurality of consecutive images or a frame of a video or the like. For example, the image is a frame of a video stream having 30 frames per second.

The image may be captured and/or provided by an optical device such as a camera, a video camera or the like. The optical device may be on and/or within the vehicle, e.g. outside the vehicle or inside the vehicle. Preferably, the optical device is near or next to the rear window, in particular having a free back view. Such a free back view, however, may include the rear window of the vehicle. For example, the optical device is a rear view video camera mounted inside the vehicle, in particular under the inside roof and near the rear window. In another example, the optical device is mounted outside the vehicle, in particular onto the roof and near the rear window.

The rear view of the vehicle is the view in rearward direction of the vehicle. In particular, the rear view is the view from the rear of the vehicle, rather the view on the rear of the vehicle. The rear view is also called back view, e.g. the view behind the vehicle, where usually other vehicles following. For example, the vehicle drives forward. In that case, the rear view is in the opposite direction of the driving direction. In another example, the vehicle drives backwards. In that case, the rear view is in the same direction as the driving direction.

In a next step, a computer vision technique is performed on the image, thereby identifying a rear risk object with a bounding volume.

Thus, a computer vision technique is used to identify and/or locate objects in an image or a frame or the like. In particular, a bounding volume is used to identify and/or locate object in the image or frame. By doing so, objects at the rear side of the vehicle may be identified, in particular as rear risk objects. Preferably, the computer vision technique is or is based on an object detection and/or an object tracking. The computer vision technique may also comprise or be based on a neural network or a neural network approach or a non-neural approach.

The object may be any kind of object. Preferably, the object is at least one of: vehicle, car, bicycle, scooter, bus, motorcycle, truck, van, person, animal, traffic sign, traffic light, lane marking or the like.

In order to perform the computer vision technique, the image may be processed or pre-processed. Preferably, the raw output of an optical device is converted into another format, e.g. by resizing, cropping, converting colors or the like. For example, an optical device provides an image in YUV having 1936x1216 pixel. This image is then converted into an image in RGB having 1920x1080 pixel. Preferably, the image provided by the optical device is resized and/or cropped into an image providing a region of interest, e.g. the lane the vehicle is driving on. For example, the image of the optical device provides a 130° degree back view. In this case, the image may be cropped to a 110° back view, since rear collisions are more likely to happen from straight behind and only objects from straight behind may be considered a rear risk object.

After the image is processed or pre-processed, the image is searched for objects, e.g. by searching for a specific color pattern or car-like shape within the image or the like. By doing so, rear risk objects, in particular objects for a potential rear-end collision, are identified, e.g. another vehicle.

Preferably, the computer vision technique also uses at least one bounding volume, in particularto identify objects within the image. The bounding volume may be used to identify the rear risk object, e.g. an entire vehicle, or a part of the rear risk object, e.g. a registration plate or the like. Preferably, the bounding volume marks or labels an object, preferably a rear risk object, in or within the image. Preferably, each object, in particular each rear risk object, is identified by a respective bounding volume.

The bounding volume is preferably a closed volume completely containing the union of an object, in particular the rear risk object. The bounding volume may have any shape or size.

Preferably, the bounding volume is at least one of bounding box, bounding capsule, bounding cylinder, bounding ellipsoid, bounding sphere, bounding slab, a bounding triangle, a convex hull, a discrete oriented polytope, a minimum bound rectangle or the like. Preferably, the bounding volume is a bounding box, in particular a minimum bounding box such as a minimum bounding rectangle.

Preferably, the computer vision technique also uses a mask generation and/or layer activation and/or weighting or the like. For example, the computer vision technique uses a region based convolution neural network (R-CNN) such as Fast R-CNN or Mask R-CNN or Mesh R-CNN. This may also enhance the accuracy of the information.

In one example, the computer vision technique is an object detection based on a non-neural approach and able to only identify other vehicles within the image. In this case, every identified vehicle may be considered a rear risk object. In another example, the computer vision technique is an object detection based on a neural network approach and able to identify (nearly) every object within the image. In this case, additional information may be used to consider an object as a rear risk object or not, e.g. object class, object position or the like. Also other additional techniques may be used to identify a rear risk object, e.g. a corridor or a lane detection for identifying vehicles within the same lane.

Preferably, a pre-defined threshold, e.g. a threshold value, is used for validating a rear risk object. For example, the computer vision technique identifies a plurality of rear risk objects in a first step. However, only objects having a confidence larger the pre-defined threshold are validated as rear risk objects. The other objects may be discarded.

In a next step, an information, in particular a distance information, of the rear risk object is determined based on at least one parameter of the bounding volume.

Thus, at least one parameter of the bounding volume is used to determine an information about the rear risk object. The information may be any kind of information. For example, the information is a distance information describing the distance between the vehicle and the rear risk object and/or the ground position of the rear risk object, preferably relative to the vehicle, or the like. In a preferred embodiment, a distance information about the rear risk object and a ground position of the rear risk object are determined.

The distance information may be any kind of information about the distance from the vehicle to the rear risk object or vice versa. Preferably, the distance information is indicating a distance of the rear risk object to the vehicle. For example, the distance information is a number, an element, a vector or the like.

For example, the vehicle is driving on a lane. Behind the vehicle is another vehicle in the same lane. The other vehicle is identified as a rear risk object as described herein, having a bounding box. The bounding box may have the shape of a rectangle, comprising a top line, a bottom line, a left line and a right line. In one case, the center of the bottom line may be used to determine the distance information, e.g. by using additional information like camera position and/or mathematics, such as geometry or trigonometry or the like. Thus, the distance of the rear risk object to the vehicle is determined based on the center of the bottom line of the bounding box of the rear risk object.

In a next step, a maneuver with the vehicle is performed based on the information, in particular based on the distance information.

The maneuver may be any kind of maneuver, in particular safety maneuver, preferably to avoid a rear-end collision with the vehicle. For example, activating any lights such as warning lights or the like. The maneuver may also be performed based on time and/or distance and/or with different escalation levels. For example, in case the other vehicle is too close, the warning lights of the vehicle may be activated. If the other vehicle then does not fall back, the braking lights may be activated, too. In case the other vehicle does still not fall back, the vehicle may pull over to the side, and/or even stop.

Thus, the method proposed herein performs a maneuver, in particular a safety maneuver, in order to avoid rear-end collisions. Preferably, the maneuver is a minimum risk maneuver.

In a preferred embodiment, the computer vision technique comprises an object detection and the rear risk object is detected and/or the computer vision technique comprises an object tracking and the rear risk object is tracked.

Thus, the method proposed herein comprises at least an object detection and/or an object tracking, in particular for a rear risk object.

In particular, object detection is a computer vision technique that allows identifying and locating objects in an image or a video or the like. With this kind of identification and localization, object detection may be used to count objects in a scene and/or determine and/or track their precise locations, all while accurately labeling them.

In particular, object tracking is based on object detection. However, object tracking is the task of taking an initial set of object detections, creating a unique ID for each of the initial detections, and then tracking each of the objects as they move around frames in a video or the like, maintaining the ID assignment.

In order to track the rear risk object, at least two images or frames of an image stream are used. By comparing the distance information of the rear risk object of each image or frame, the rear risk object may be tracked. By tracking the other vehicle, it can be determined whether a maneuver is needed and/or successful.

Preferably, the computer vision technique is a real-time technique, e.g. real-time object detection and/or real-time object tracking. For this, a real-time object detection and/or tracking unit may be used. Thus, the method proposed herein uses real-time object detection and/or tracking.

In a preferred embodiment, the computer vision technique is an object tracking, in particular tracking the rear risk object over consecutive images to infer velocity information of the rear risk object.

In a preferred embodiment, the computer vision technique is based on a neural network approach. The neural network may be trained with data of rear view images and/or rear view streams or the like. Preferably, the neural network is trained to identify object which interact and/or interfere and/or cause rear-end collisions with vehicles in traffic such as vehicles, cars, bicycles, busses, motorcycles, trucks, vans, persons, animals, traffic signs, traffic lights and/or lane markings.

Preferably, the You Only Look Once (YOLO) approach is used, e.g. YOLOv4, YOLOv5 or the like. In another embodiment, the CenterNet approach may be used.

In a preferred embodiment, the bounding volume is at least one of: bounding box, bounding capsule, bounding cylinder, bounding ellipsoid, bounding sphere, bounding slab, a bounding triangle, a convex hull, a discrete oriented polytope, a pixel-mask, a minimum bound rectangle, preferably the bounding box is a minimum bounding box, in particular a minimum bounding rectangle.

Thus, the object detection and/or the object tracking uses a bounding volume technique, e.g. by using a Canny edge detector and/or a non-maximum suppression. For example, the other vehicle is identified via a 2D approach. In this case, all points of the front view of the other vehicle are within a rectangular box, having the smallest measure forming the minimum bounding box.

In a preferred embodiment, the image is a frame of a video stream of a camera, in particular on the vehicle, preferably watching the rear view of the vehicle.

Thus, the vehicle comprises at least one camera, preferably video camera, providing images of the rear view of the vehicle. For example, the vehicle comprises a video camera at the lower rear end providing a video stream of the rear view of the vehicle. The video stream may then pre-processed or processed into an image sequence and an image tracking or object tracking may be performed on the image or image sequence. For example, the video stream is processed into a sequence of images. Then, adjacent or consecutive images of the sequence of images may be used to track an object, in particular the rear risk object.

In a preferred embodiment, the computer vision technique is a 2D computer vision technique using a 2D bounding box or a 3D computer vision technique using a 3D bounding box.

In a 2D object detection, the determined distance information may be sometimes a little bit inaccurate, e.g. in curves or the like. However, a 2D object detection is not as computerheavy as 3D object detection.

In a preferred embodiment, the rear risk object is at least one of the following objects: a car, a van, a truck, a bus, a bicycle, a motorcycle, a scooter or the like.

Preferably, every object which can appear within the same lane as the ego vehicle during usual traffic and cause a rear-end collision is or can be considered a rear risk object. Such an object may be a car, a van, a truck, a bus, a bicycle, a motorcycle, a scooter or the like. The scooter may be a motorized scooter or an e-scooter or unmotorized scooter, such as a kick scooter, or the like.

Preferably, a neural network approach is used to detect these objects. In particular, the neural network is trained to detect these objects, e.g. by training data showing these objects and/or associated labels thereof.

In a preferred embodiment, the computer vision technique also includes an identification area and/or a lane detection.

The identification area may have any kind of shape or form, e.g. like a polygon or a corridor or the like. The identification area may be set into the image or the frame. Preferably, the identification area marks a part of the image or frame as "to search" or as "not to search". In one embodiment, the identification area is a fixed corridor, e.g. with specific values such as position and measures. In another embodiment, the identification area is a dynamic or variable corridor, e.g. depending on another value, e.g. the speed of the ego vehicle or the like. For example, the camera type, camera position and the image size are known. In this case, a fixed corridor may be set based on knowledge as an overlay on every image or frame within the object detection, thereby marking a part of the image. By doing so, parts of the image or frame can be discarded. For example, only the lane is marked (approximately) as "to search". The corridor may have any kind of shape. Preferably, the corridor is based on a simple linear functions or a freely shaped polygon. The corridor may also be manually or automatically generated, e.g. by using a pixel-mask or the like.

In another embodiment, the computer vision technique also includes a lane detection. For example, a neural network is used and the neural network is designed to identify and/or also identify the lane in which the vehicle is driving, e.g. based on odometry data and/or road surface marking. The lane detection may be part of the object detection or standalone.

For example, an image is provided. Afterwards, the objects and/or the lane within the image are identified chronological, first the objects and then the lane, or vice versa. After the identification of the objects and the lane is completed, any object within the lane is considered a rear risk object. In another embodiment, the object and the lane are detected simultaneously. Alternatively, instead of detecting a lane, a fixed corridor may be set, preferably based on sensor data and sensor position. In this case, the corridor is also to identify rear risk objects.

The identification area and/or the lane detection may enhance the speed and/or accuracy of the computer vision technique.

In a preferred embodiment, the information, in particular the distance information, is determined based on at least one of: a lower center point of the bounding volume, in particular a bounding box, odometry data, IMU data, camera or sensor intrinsics, camera or sensor extrinsics or the like.

Thus, a plurality of data, such as the lower center point of a bounding box, may be used to determine the information, e.g. to estimate the distance of the ego vehicle to the rear risk object.

In addition, camera intrinsics, such as parameters of model lens distortion, and camera extrinsics, such as full camera pose information, like height, position and rotation of the camera, may be used to improve the accuracy of the information, in particular the distance information.

Moreover, data of odometry or an inertial measurement unit (IMU) may be used to further improve the accuracy. Preferably, also data about the environment of the vehicle may be used to even further improve the accuracy of the information. Such data may be vertical or horizontal acceleration, information about lane or road characteristics or map data such as GPS data. Also, radar and/or lidar data may be used. Preferably, such data is used to determine the elevation of the vehicle and/or to estimate the ground plane under and around the vehicle. Also, by considering such information, the accuracy of the estimation of the distance between the rear risk object and the ego vehicle can be further improved, e.g. by using depth estimation.

In a preferred embodiment, the maneuver is at least one of: warning signal; slowing down; switching lane or the like.

For example, the other vehicle is too close, then the warning light is activated, e.g. for 5 seconds or as along as the other vehicle is too close.

In a preferred embodiment, the maneuver is performed based on escalation levels. Preferably, at least two escalation levels are used and/or the escalation level depends on time and/or distance to the other vehicle and/or speed. For example, in the first escalation level the warning light is activated and in the second escalation level the vehicle is slowed down. To start the first escalation level, a first trigger may be used, e.g. a predefined distance and/or a period of time. For example, the first level is started, when the other vehicle stays within a predefined distance for a prolonged period of time. A second trigger may be used for the second escalation level and so on.

In another example, two escalation levels are used. For example, the vehicle is slowed down with a first acceleration in the first escalation level and with a second acceleration in the second escalation level, in particular, wherein the second acceleration is greater than the first acceleration. Preferably, each escalation level comprises a different action such as a gentle brake, a harsh brake, a stop, a slowdown, a pull over, a pull over to side, activating warning lights, activating braking lights, activating hazard lights or the like.

Preferably, one escalation level may also comprise tighten the seat belts for all passengers and/or dial a number for an emergency call.

In a preferred embodiment, the maneuver is performed based on the distance of the rear risk object to the vehicle and/or based on the speed of the rear risk object and/or the vehicle.

In a preferred embodiment, the maneuver is started when the rear risk object enters a predefined warning zone.

The predefined warning zone may be a fixed distance, in particular from the rear of the vehicle, and/or based on speed of the vehicle and/or speed of the rear risk object.

In a preferred embodiment, the warning zone has a first section and/or a second section and/or a third section.

In order to prevent confusion among other road users, the predefined warning zone is divided into different sections, each of them serving another purpose.

For example, the first section activates the maneuver, the second section is a neutral section and the third section deactivates the maneuver, e.g. the warning lights. In this case, the first section is a warning enable section and the third section is a warning disable section.

In a preferred embodiment, the predefined warning zone comprises a warning enable section and a warning disable section, wherein at least one of: the warning enable section is at the rear side of the vehicle; the warning enable section is closer to the vehicle than the warning disable section; the warning disable section is at the rear side of the vehicle; the warning disable section is apart from the warning enable section.

Preferably, the predefined warning zone and/or any of section is fixed and/or based on the speed of the vehicle and/or the rear risk object.

According to a second aspect of the invention, a computer program product is provided, comprising program code means for performing a method as described herein when the program is run on a computer.

According to a third aspect of the invention, a control unit for a vehicle and/or a real-time object detection and/or a system for detecting and/or tracking objects on a rear of a vehicle is provided, configured to perform a method as described herein.

According to a fourth aspect of the invention, a control device is provided, comprising a computer program product and/or a control unit as described herein.

According to a fifth aspect of the invention, a vehicle, in particular a teleoperated vehicle, is provided, comprising a control device as described herein and/or at least one sensor for collecting video and/or audio data of at least one side of said vehicle and/or means for sending said video and/or audio data to a teleoperator station.

### BRIEF DESCRIPTION OF THE DRAWINGS

With reference to the appended drawings, below follow a more detailed description of embodiments of the invention cited as examples.

In the drawings:
- Fig. 1A: shows a teleoperated vehicle in a preferred embodiment.
- Fig. 1B: shows a method for controlling a teleoperated vehichle in a preferred embodiment.
- Fig. 2A: shows a rear view of the vehicle in a frame of an image stream.
- Fig. 2B: shows a rear view of the vehicle in a frame of an image stream while an object detection.
- Fig. 2C: shows a rear view of the vehicle in a frame of an image stream while filtering for rear risk objects.
- Fig. 2D: shows a rear view of the vehicle in a frame of an image stream while determining the distance.
- Fig. 3: show a side view on the vehicle with a warning zone.

Still other objects and features of embodiments herein will become apparent from the following detailed description considered in conjunction with the accompanying drawings.

It is to be understood, however, that the drawings are designed solely for purposes of illustration and not as a definition of the limits hereof, for which reference should be made to the appended claims.

It should be further understood, that the drawings are not necessarily drawn to scale and that, unless otherwise indicated, they are merely intended to conceptually illustrate the structures and procedures described herein.

### DETAILED DESCRIPTION OF EXAMPLE EMBODIMENTS OF THE INVENTION

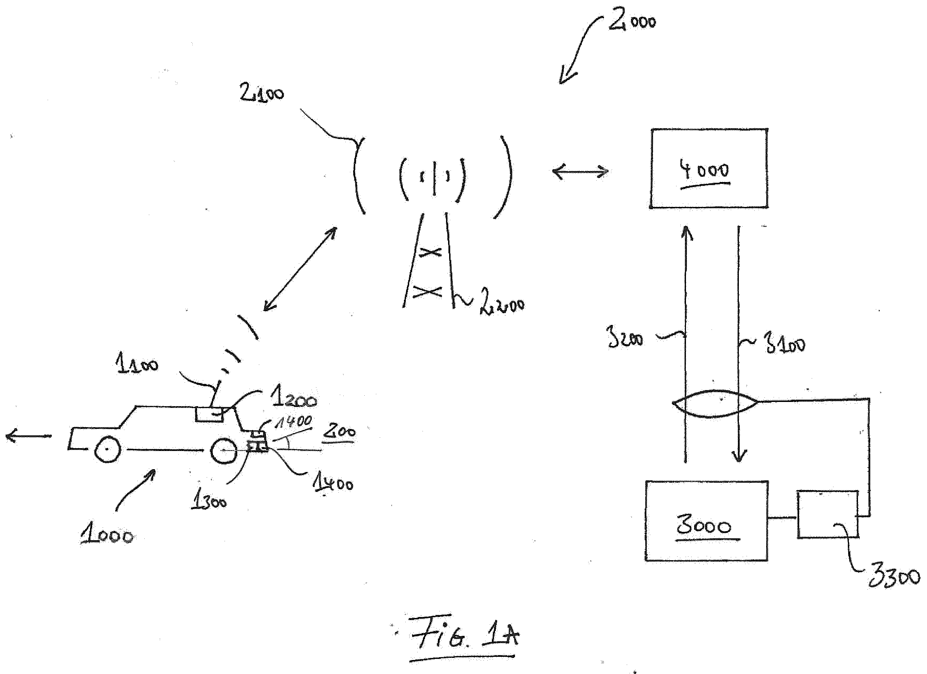

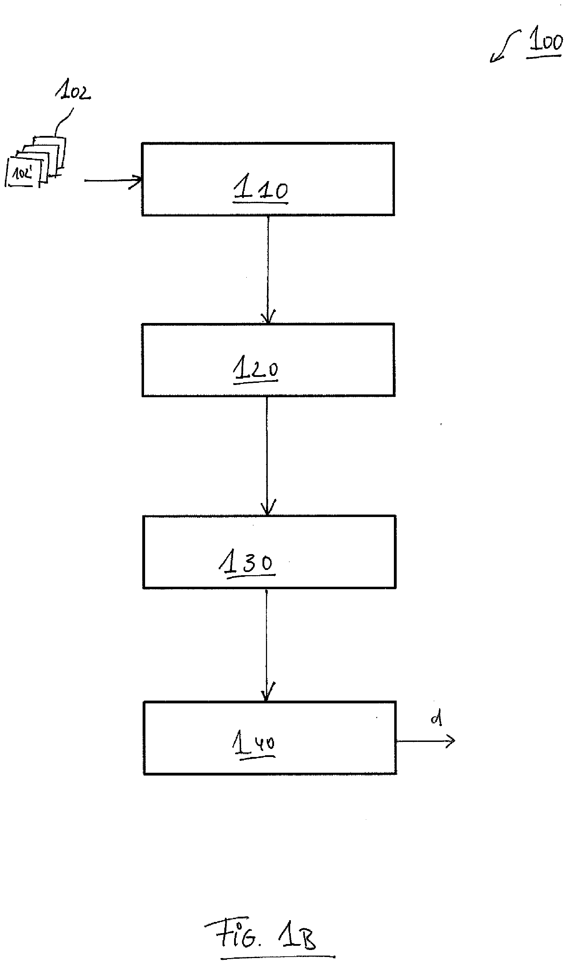

Fig. 1 shows a teleoperated vehicle 1000, which is teleoperated via a network 2000 by a teleoperator station 3000.

The teleoperated vehicle 1000, e.g. a car, comprises an antenna 1100, a control unit 1200, a real-time object detection system 1300, a camera 1400 and a rear warning signal 1500.

The antenna 1100 is configured for communicating with said network 2000, e.g. sending data to said network and/or receiving data from said network. In addition, said antenna 1100 is connected to said control unit 1200 in order to control said vehicle 1000.

The control unit 1200 is connected to the antenna 1100, the real-time object detection system 1300, the camera 1400 and the rear warning signal 1500.

The control unit 1200 is also configured to communicate with the antenna 1100, the real-time object detection system 1300 and the rear warning signal 1400, in particular to control each of them and/or receive data from them.

For example, the control unit 1200 may communicate with the antenna 1100 by sending data to the antenna und/or receiving data from the antenna 1100, e.g. for controlling the teleoperated vehicle 1000 via the teleoperator station 3000.

Preferably, the control unit 1200 is also configured for performing a method as described herein, e.g. by using the real-time object detection system 1300.

For example, the real-time object detection system 1300 detects another car following, in particular too close. The real-time objection detection system 1300 sends this information, e.g. "following vehicle too close", to the control unit 1200 and the control unit activates the rearwarning signal 1400.Therefore, the activation of the rearwarning signal 1400 is applied automatically.

In another example, the real-time object detection system 1300 detects another car following, in particular too close. The real-time objection detection system 1300 sends this information to a telestation and preferably to the control unit 1200. The control unit 1200 activates the rear warning signal 1400, only after permission by the telestation, e.g. the teledriver.

Said network 2000 uses cellular communication and may comprise a network mast 2200.

Said network 2000 is also connected to a teleoperator station 3000, e.g. via the internet 4000.

Said teleoperation station 3000 receives data 3100, in particular sensor data of said teleoperated vehicle 1000, e.g. video data and audio data, and sends control data 3200, e.g. steering wheel commands or throttle and braking commands, to said teleoperated vehicle 1000. Within said teleoperator station 3000, an operator, a human being, controls said vehicle, e.g. by direct driving.

The teleoperation station 3000 may also comprise an intelligent perception system for monitoring the environment of said vehicle, e.g. by using the video data 3100.

Fig. 1B shows a method 200 for controlling a teleoperated vehichle in a preferred embodiment.

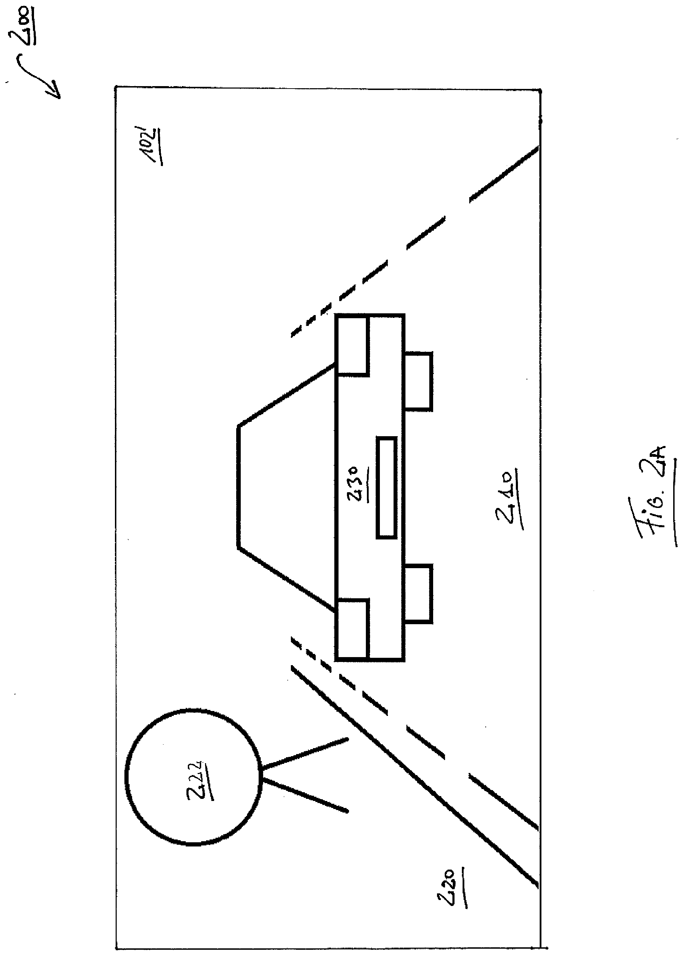

In a first step 110, an image stream 102 of the rear view of the vehicle is provided. A frame 102' of this step is also shown in Fig. 2A.

Preferably, the image stream 102 is in form of a video, provided by a camera within the vehicle.

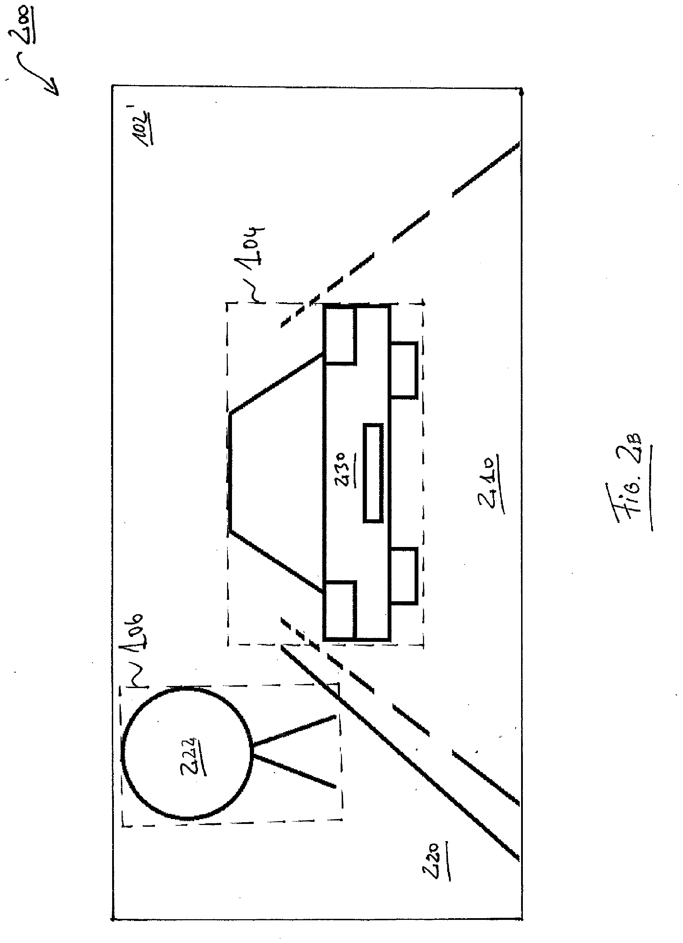

In a next step 120, an object detection is performed on the image stream, in particular on the frame 102'. A frame 102' of this step is also shown in Fig. 2B.

In particular, the object detection identifies each known object within the frame 102', e.g. another vehicle 230, which is following the own vehicle in the same lane and a tree 222 on the sidewalk 220. Each of the known objects is found and marked (labeled) by the object detection with a bounding box 104, 106.

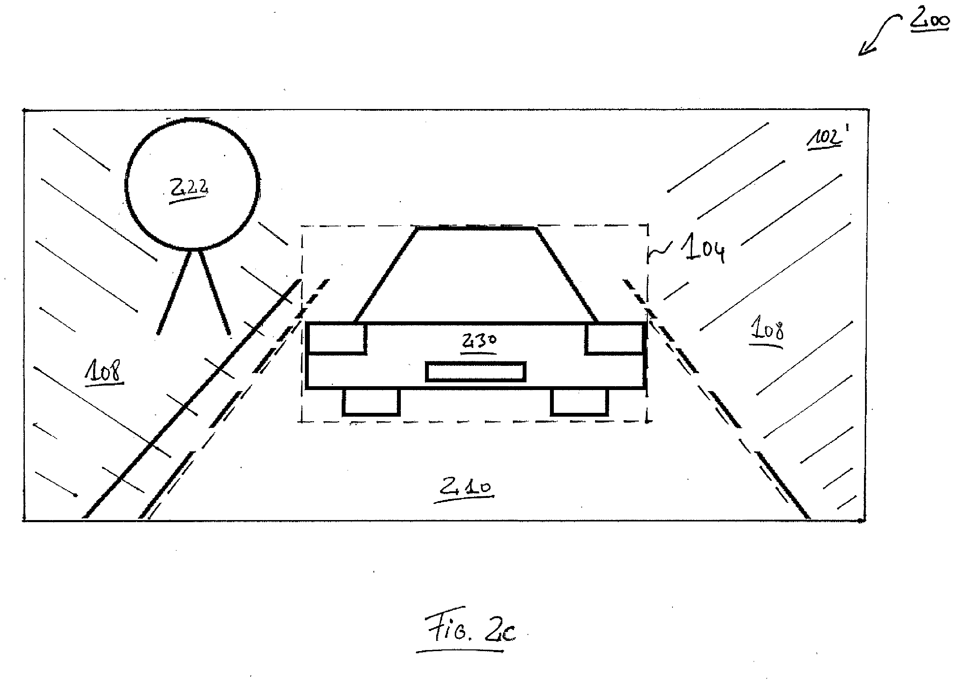

In a next step 130, the objects identified are filtered for object types at risk of causing a rear-end collision. A frame 102' of this step is also shown in Fig. 2C.

In this case, a corridor 108 is used, marking the are outside the lane 210, the own vehicle is driving in. Therefore, every object 222 within the corridor 108 is discarded and every object 230 outside the corridor 108 is identified as a rear risk object 104, in this case the other vehicle 230.

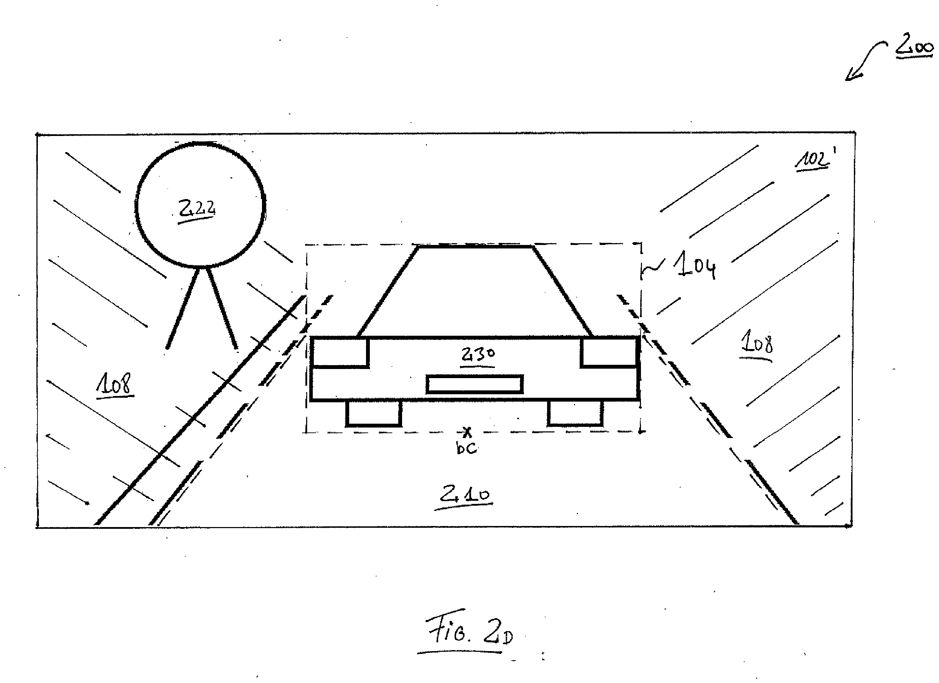

In a next step 140, a distance d of the vehicle to the rear risk object 230 is determined. A frame 102' of this step is also shown in Fig. 2D.

In this case, the bounding box 104 of the other vehicle 230 has a shape of a rectangle, comprising a top line, a bottom line, a left line and a right line. The center bc of the bottom line is used to determine the distance d of the own vehicle to the following vehicle. For example, the position of the center bc within the frame, the camera position on the own vehicle of the camera providing the image stream are used within triangulation to determine the distance.

By using a minimum bounding box for the rear risk object, the accuracy of the method provided herein is enhanced.

The steps of one embodiment of the method proposed herein are described in Fig. 2A-2D.

Fig. 2A shows a rear view 200 of the vehicle 100, in particular in a frame of an image stream 102.

The vehicle 100, in particular the own vehicle, is driven down a lane 210. Next to the lane 210 is a sidewalk 220 with a tree 222.

The vehicle 100 is followed by another vehicle 230, which drives in the same lane 210.

Fig. 2B shows a rear view 200 of the vehicle 100, in particular in the frame after an object detection.

The object detection may be performed as described herein, e.g. by using YOLO. Depending on the database, the object detection is able to identify different objects, like the other car 230 or the tree 222. Each of them is marked with a bounding box, in particular a minimum bounding box.

Fig. 2C shows a rear view 200 of the vehicle 1000 in a frame of an image stream while filtering for rear risk objects.

Due to the corridor 108, only the other vehicle 230 is identified as a rear risk object.

Fig. 2D shows a rear view 200 of the vehicle 1000 in a frame of an image stream while determining the distance.

The other vehicle 230 is identified via the bounding box 104. The bounding box 104 is of rectangle shape having a bottom line. The center bc of the bottom line is used to determine the distance information for the distance d.

The distance information is then used to perform a maneuver if necessary.

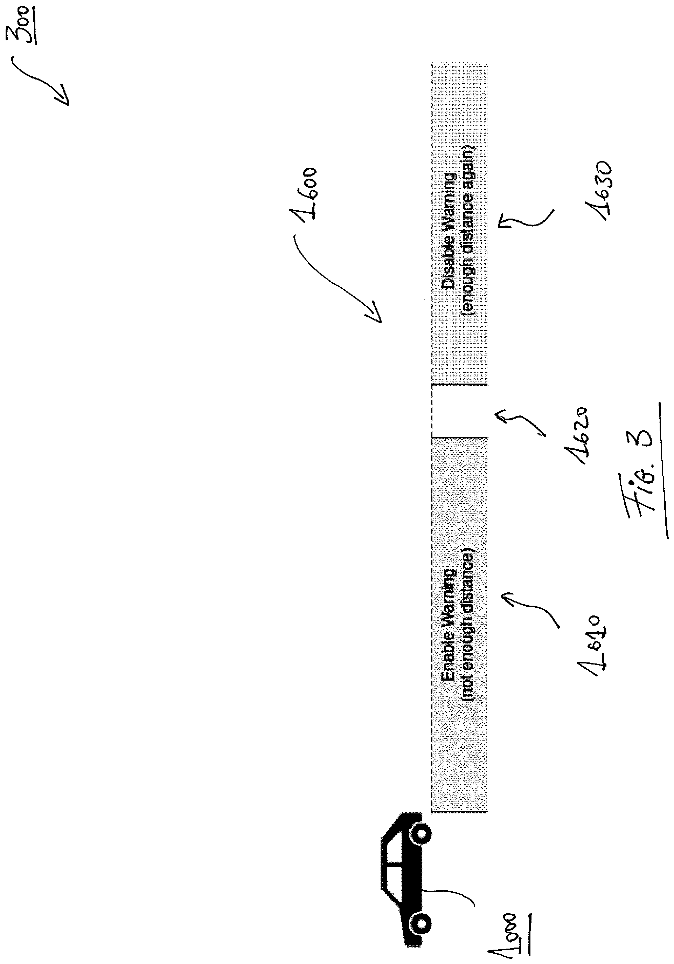

Fig. 3 shows a side view 300 on the vehicle 1000, in particular the own vehicle, with a predefined warning zone 1600.

The predefined warning zone 1600 is used to determine whether a maneuver is to perform or not.

The warning zone 1600 comprises a first section 1610, a second section 1620 and a third section 1630.

The first section 1610 determines that the rear risk object is too close. The second section 1620 is a neutral section, in particular to space the first section 1610 from the third section 1630. The third section 1630 determines that the rear risk object is far enough.

For example, another vehicle follows the own vehicle 1000. If the other vehicle enters the first section 1610, the warning signals are enabled. The warning signals will be deactivated again when the other vehicle drops back into the third section 1630.

The second section 1620 ensures that other vehicles do not toggle the maneuver and the activation and deactivation thereof too fast.

Preferably, also time periods are used.

For example, the other vehicle needs to stay within a section a prolonged period of time in order to trigger the activation or deactivation of the maneuver.

Preferably, there are also multiple escalation levels for the maneuver.

For example, in the first level only the warning lights are used. But, in the second level also braking lights are used. Each level may be based on time and/or distance and/or change is distance. For example, 0 to 10 second for level 1 (warning lights), 10 to 20 seconds for level 2 (braking lights) and above 20 second for level 3 (change lane).

### Reference numerals

- 100: method for controlling a teleoperated vehicle
- 102: image stream
- 102': frame or picture of the image stream
- 104: bounding box, in particular of another vehicle
- 106: bounding box, in particular of another object
- 108: corridor
- 110: step of: providing an image stream
- 120: step of: object detection
- 130: step of: filtering
- 140: step of: determining
- 300: side view on the vehicle
- 1000: vehicle, in particular of the vehicle
- 1100: antenna, in particular of the vehicle
- 1200: control unit, in particular of the vehicle
- 1300: real-time object detection system, particular of the vehicle
- 1400: camera
- 1500: rear warning signal
- 1600: warning zone
- 1610: first area, in particular of the warning zone
- 1620: second area, in particular of the warning zone
- 1630: third area, in particular of the warning zone
- 2000: network
- 2100: wireless communication
- 2200: network mast
- 3000: teleoperator station
- 4000: internet
- bc: bottom center
- d: distance

## Claims

1. Method for controlling a vehicle, in particular a teleoperated vehicle, comprising the steps of:
- providing an image of a rear view of the vehicle;
- performing a computer vision technique on the image, thereby identifying a rear risk object with a bounding volume;
- determining an information, in particular a distance information, of the rear risk object based on at least one parameter of the bounding volume; and
- performing a maneuver with the vehicle based on the information, in particular the distance information.

2. Method according to claim 1, wherein
- the computer vision technique comprises an object detection and the rear risk object is detected and/or
- the computer vision technique comprises an object tracking and the rear risk object is tracked.

3. Method according to claim 1 or 2, wherein
- the computer vision technique is based on a neural network approach.

4. Method according to any of the preceding claims, wherein
- the bounding volume is at least one of: bounding box, bounding capsule, bounding cylinder, bounding ellipsoid, bounding sphere, bounding slab, a bounding triangle, a convex hull, a discrete oriented polytope, a pixel-mask, a minimum bound rectangle, preferably a minimum bounding box, in particular a minimum bounding rectangle.

5. Method according to any of the preceding claims, wherein
- the computer vision technique is a 2D computer vision technique using a 2D bounding box or a 3D computer vision technique.

6. Method according to any of the preceding claims, wherein
- the rear risk object is at least one of the following objects:
- a car;
- a van;
- a truck;
- a bus;
- a bicycle,
- a motorcycle,
- a scooter.

7. Method according to any of the preceding claims, wherein
- the computer vision technique also includes an identification area and/or a lane detection.

8. Method according to any of the preceding claims, wherein
- the information, in particular the distance information, is determined based on at least one of:
- a lower center point of a bounding box,
- odometry data,
- IMU data,
- camera or sensor intrinsics,
- camera or sensor extrinsics,
- data about the environment of the vehicle

9. Method according to any of the preceding claims, wherein
- the maneuver is at least one of:
- warning signal;
- slowing down;
- switch lane.

10. Method according to any of the preceding claims, wherein
- the maneuver is performed based on escalation levels and/or
- the maneuver is performed based on the distance of the rear risk object to the vehicle and/or
- the maneuver is performed based on the speed of the rear risk object and/or the vehicle.

11. Method according to any of the preceding claims, wherein
- the maneuver is started when the rear risk object enters a warning zone; and/or
- the warning zone has a first section and/or a second section and/or a third section; and/or
- the warning zone comprises a warning enable section and a warning disable section, wherein at least of:
- the warning enable section is at the rear side of the vehicle;
- the warning enable section is closer to the vehicle than the warning disable section;
- the warning disable section is at the rear side of the vehicle;
- the warning disable section is apart from the warning enable section.

12. A computer program product comprising program code means for performing the steps of any of claims 1 to 11 when the program is run on a computer.

13. A control unit for a vehicle and/or a real-time object detection and/or system for detecting and/or tracking objects on a rear of a vehicle, configured to perform the steps of the method according to any of claim 1 to 11.

14. A control device for a vehicle comprising optionally a computer and at least one of:
- a computer program product according to claim 12, and/or
- a control unit according to claim 13.

15. A vehicle, in particular a teleoperated vehicle, comprising a control device according to claim 14 and/or at least one sensor for collecting video and/or audio data of at least one side of said vehicle and/or means for sending said video and/or audio data to a teleoperator station and/or means for receiving control commands of said teleoperator station.
